# EUROPEAN PATENT APPLICATION

(11) **EP 4 586 459 A1**
(43) Date of publication of application: **16.07.2025**
(21) Application number: 24151299.5
(22) Date of filing: 11.01.2024
(51) Int. Cl.: H02J 9/06

(54) **EMERGENCY POWER SUPPLY UNIT, PSU, FOR A LIGHTING CONTROL BUS**

(71) Applicant: Tridonic GmbH & Co. KG, 6851 Dornbirn (AT)
(72) Inventor: Wilson, Ian, 6851 Dornbirn (AT)
(74) Representative: Rupp, Christian

(57) **Abstract**

Disclosed is an emergency power supply unit, PSU *(1)*, for a lighting control bus (2). The emergency PSU *(1)* comprises a central battery *(11)* for the lighting control bus *(2).* The emergency PSU *(1)* further comprises an AC/DC converter *(12)*, configured to convert an AC voltage of a mains supply *(3)* to a DC voltage of the central battery *(11)*. The emergency PSU *(1)* further comprises a DC/DC converter *(13)*, configured to convert the DC voltage of the central battery *(11)* to a DC voltage of the lighting control bus *(2)*. The emergency PSU *(1)* further comprises switching means *(14)*, configured to supply the DC/DC converter *(13)* from the AC/DC converter *(12)* in absence of an emergency indication, and supply the DC/DC converter *(13)* from the central battery *(11)* in presence of the emergency indication. The emergency PSU *(1)* further comprises control means *(15)*, configured to signal the emergency indication to the switching means *(14)* upon an emergency event. The emergency PSU *(1)* further comprises detecting means *(16)*, configured to detect a failure of the mains supply *(3)*, and signal the emergency event of the failure of the mains supply *(3)* to the control means *(15)*. This avoids loss of communication over the lighting control bus *(2)* upon loss of power supply in an installation.

## Description

### Technical Field

The present disclosure relates generally to the field of lighting technology, especially emergency lighting, and lighting control, and more particularly to an emergency PSU for a lighting control bus as well as to a kit for the lighting control bus.

### Background Art

Currently the state of the art in DALI emergency power supplies does not allow communication in emergency mode because of a lack of battery backup. More specifically, the emergency DALI units can communicate in emergency mode but there is a lack of battery backup for the DALI bus power such that the communication is blocked. This prevents the use of a self-contained system for adaptive exit signs because their state needs to be changed during the emergency mode. In general central systems are therefore preferred for adaptive exit signs.

### Summary

It is an object to overcome these and other drawbacks of the prior art.

The foregoing and other objects are achieved by the features of the independent claims. Further implementation forms are apparent from the dependent claims, the description and the figures.

According to a first aspect, an emergency power supply unit, PSU, for a lighting control bus is provided. The emergency PSU comprises a central battery for the lighting control bus. The emergency PSU further comprises an AC/DC converter, configured to convert an AC voltage of a mains supply to a DC voltage of the central battery. The emergency PSU further comprises a DC/DC converter, configured to convert the DC voltage of the central battery to a DC voltage of the lighting control bus. The emergency PSU further comprises switching means, configured to supply the DC/DC converter from the AC/DC converter in absence of an emergency indication, and supply the DC/DC converter from the central battery in presence of the emergency indication. The emergency PSU further comprises control means, configured to signal the emergency indication to the switching means upon an emergency event. The emergency PSU further comprises detecting means, configured to detect a failure of the mains supply, and signal the emergency event of the failure of the mains supply to the control means.

The control means may further be configured to signal a shut-down indication to non-emergency lighting devices on the lighting control bus in presence of the emergency indication.

Signaling the shut-down indication to the non-emergency lighting devices on the lighting control bus in presence of the emergency indication may comprise that the DC voltage of the lighting control bus in presence of the emergency indication is different from the DC voltage of the lighting control bus in absence of the emergency indication.

The DC voltage of the lighting control bus in presence of the emergency indication may comprise a first logical high-level voltage of the lighting control bus and the DC voltage of the lighting control bus in absence of the emergency indication may comprise a second logical high-level voltage of the lighting control bus.

The first logical high-level voltage of the lighting control bus may be higher than the second logical high-level voltage of the lighting control bus.

Signaling the shut-down indication to the non-emergency lighting devices on the lighting control bus in presence of the emergency indication may comprise that the control means is further configured to send a command being indicative of the shut-down indication to the non-emergency lighting devices via the lighting control bus.

The lighting control bus may comprise a Digital Addressable Lighting Interface, DALI, bus.

According to a second aspect, a use of an emergency PSU of the first aspect is provided for continued power supply of a locally battery-buffered emergency lighting device in presence of the emergency indication and after depletion of the local battery of said emergency device.

According to a third aspect, a use of an emergency PSU of the first aspect is provided for continued power supply of a sensor-based adaptive emergency lighting device and continued communication with the same in presence of the emergency indication.

According to a fourth aspect, a use of an emergency PSU of the first aspect is provided for continued power supply of a lighting scene control device for control of sensor-based adaptive emergency lighting devices and continued communication with the same in presence of the emergency indication.

According to a fifth aspect, a kit is provided, comprising an emergency lighting device having a first interface and a sensor device having a second interface; the first and second interfaces being configured to mate with one another for mechanical, electrical and communication connectivity between the emergency lighting device and the sensor device.

### Advantageous Effects

The present disclosure provides a DALI PSU with emergency backup that maintains communication over DALI when power supply is lost in an installation. This enables
- powering an application controller (for lighting scene control) in emergency mode,
- powering and reading sensors (for adaptive exit signs) in emergency mode, and control the state of the system,
- powering a microcontroller in the emergency driver by sending power across the DALI interface (via a SELV resistor - or any other coupling means that provides the needed isolation - off the DALI bus once the LVPS is lost),
- using an existing self-contained emergency portfolio towards adaptive exit signs and emergency lighting (with the exception that the existing portfolio may require adaptation to support changing exit signage running man direction, for example), and
- integration of sensors inside the emergency luminaire portfolio and reuse the power supply and the communication means to reduce the cost of the sensors (smaller sensor sizes).

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.

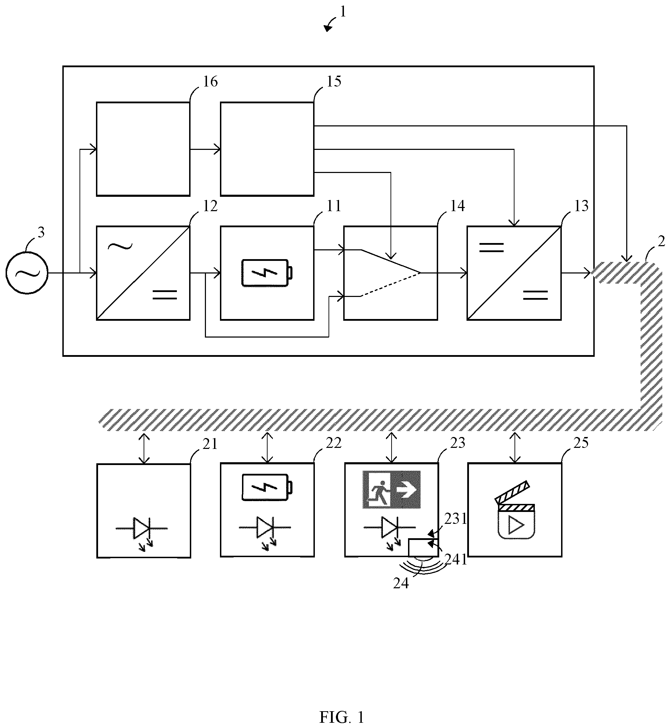

**FIG. 1** illustrates an emergency PSU for a lighting control bus in accordance with the present disclosure.

### Detailed Descriptions of Drawings

In the following description, reference is made to the accompanying drawings, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

FIG. 1 illustrates an emergency PSU *1* for a lighting control bus *2* in accordance with the present disclosure.

In particular, the lighting control bus *2* may comprise a Digital Addressable Lighting Interface, DALI, bus.

The emergency PSU *1* comprises a central battery *11* for the lighting control bus *2.*

The emergency PSU *1* further comprises an AC/DC converter *12* (i.e., battery charging circuit), configured to convert an AC voltage of a mains supply 3 to a DC voltage of the central battery *11*.

The emergency PSU *1* further comprises a DC/DC converter *13,* configured to convert the DC voltage of the central battery *11* to a DC voltage of the lighting control bus *2.* For example, a boost converter may be used to step up the battery DC voltage to the DALI level.

In accordance with an implementation, the AC/DC converter *12* may provide a DC voltage aligned with a non-emergency voltage of the lighting control bus *2* (e.g., DALI bus) to constitute a DC bus supply in mains (non-emergency) mode. This DC bus supply could then be used to also provide a battery charging current via a separate regulator (not shown), e.g. current source. In emergency mode the DC voltage of the central battery *11* could then be stepped up via DC/DC converter 13 to a voltage level that would supply the lighting control bus *2* in emergency mode.

The emergency PSU *1* further comprises switching means *14,* configured to supply the DC/DC converter *13* (and in turn the lighting control bus *2* and the central battery *11*) from the AC/DC converter *12* in absence of an emergency indication, and supply the DC/DC converter 13 from the central battery *11* in presence of the emergency indication.

This will work where the DC/DC step up is always in use both in mains and emergency mode and the central battery *11* forms the DC rail. The switching means *14* may not be needed if the AC/DC source supplies the central battery *11* at its DC voltage and always boosts the DC rail either in mains or emergency mode.

The emergency PSU *7* further comprises control means *15*, configured to signal the emergency indication to the switching means *14* upon an emergency event.

The emergency PSU *1* further comprises detecting means *16,* configured to detect a failure of the mains supply *3,* and signal the emergency event of the failure of the mains supply *3* to the control means *15*.

For example, in case of emergency, the battery charge supply will be lost and this can be used to signal the emergency event to the control means *15*, such that the DC/DC converter *13* can power the emergency PSU *1* off the central battery *11*.

The control means *15* may further be configured to signal a shut-down indication to non-emergency lighting devices *21* on the lighting control bus *2* in presence of the emergency indication.

Signaling the shut-down indication to the non-emergency lighting devices *21* on the lighting control bus *2* in presence of the emergency indication may be embodies in different variants.

One embodiment may comprise that the DC voltage of the lighting control bus *2* in presence of the emergency indication is different from the DC voltage of the lighting control bus *2* in absence of the emergency indication.

For example, the DC voltage of the lighting control bus *2* in presence of the emergency indication may comprise a first logical high-level voltage of the lighting control bus *2* and the DC voltage of the lighting control bus *2* in absence of the emergency indication may comprise a second logical high-level voltage of the lighting control bus *2.*

In particular, the first logical high-level voltage of the lighting control bus *2* may be higher than the second logical high-level voltage of the lighting control bus *2.* In other words, the DALI PSU supply voltage level can be adjusted to indicate the mode of operation such as 15Vdc off mains (i.e., in absence of the emergency indication) and 20Vdc off battery (i.e., in presence of the emergency indication).

Another embodiment may comprise that the control means *15* is further configured to send a command being indicative of the shut-down indication to the non-emergency lighting devices *21* via the lighting control bus *2.*

Notwithstanding the different variants, the emergency PSU *1* of the first aspect may be used
a) for continued power supply of a locally battery-buffered emergency lighting device *22* in presence of the emergency indication and after depletion of the local battery of said emergency device,
b) for continued power supply of a sensor-based adaptive emergency lighting device *23* and continued communication with the same in presence of the emergency indication (for adaptive exit signs the state of the sensors needs to be understood in emergency mode), and/or
c) for continued power supply of a lighting scene control device *25* (i.e., an application controller) for control of sensor-based adaptive emergency lighting devices *23* and continued communication with the same in presence of the emergency indication.

Note that application scenario b) may enable intruder detection, people counting (exit signs above doors having especially suitable locations), air quality sensing, CO/CO₂ detection and/or fire/smoke detection in emergency mode, for example.

FIG. 1 further shows a kit *23, 24,* comprising an emergency lighting device *23* having a first interface *231* and a sensor device *24* having a second interface *241,* wherein the first and second interfaces *231, 241* are configured to mate with one another for mechanical, electrical and communication connectivity between the emergency lighting device *23* and the sensor device *24.*

As sensors are only needed in small numbers and emergency luminaires constitute 10-20% of all luminaires, it may be beneficial to add sensor device *24* only on demand. Furthermore, the office ceiling is cleaned up, since sensors are integrated in the emergency lighting instead of in a new box.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. An emergency power supply unit, PSU (1), for a lighting control bus (2), comprising a central battery (11) for the lighting control bus (2);
an AC/DC converter (12), configured to
convert an AC voltage of a mains supply (3) to a DC voltage of the central battery (11);
a DC/DC converter (13), configured to
convert the DC voltage of the central battery (11) to a DC voltage of the lighting control bus (2);
switching means (14), configured to
supply the DC/DC converter (13) from the AC/DC converter (12) in absence of an emergency indication, and
supply the DC/DC converter (13) from the central battery (11) in presence of the emergency indication;
control means (15), configured to
signal the emergency indication to the switching means (14) upon an emergency event; and detecting means (16), configured to
detect a failure of the mains supply (3); and
signal the emergency event of the failure of the mains supply (3) to the control means (15).

2. The emergency PSU (1) of claim 1,
the control means (15) further configured to
signal a shut-down indication to non-emergency lighting devices (21) on the lighting control bus (2) in presence of the emergency indication.

3. The emergency PSU (1) of claim 2,
wherein signaling the shut-down indication to the non-emergency lighting devices (21) on the lighting control bus (2) in presence of the emergency indication comprises that the DC voltage of the lighting control bus (2) in presence of the emergency indication is different from the DC voltage of the lighting control bus (2) in absence of the emergency indication.

4. The emergency PSU (1) of claim 3,
wherein the DC voltage of the lighting control bus (2) in presence of the emergency indication comprises a first logical high-level voltage of the lighting control bus (2) and the DC voltage of the lighting control bus (2) in absence of the emergency indication comprises a second logical high-level voltage of the lighting control bus (2).

5. The emergency PSU (1) of claim 4,
wherein the first logical high-level voltage of the lighting control bus (2) is higher than the second logical high-level voltage of the lighting control bus (2).

6. The emergency PSU (1) of claim 2,
wherein signaling the shut-down indication to the non-emergency lighting devices (21) on the lighting control bus (2) in presence of the emergency indication comprises that the control means (15) is further configured to send a command being indicative of the shut-down indication to the non-emergency lighting devices (21) via the lighting control bus (2).

7. The emergency PSU (1) of any one of the preceding claims,
the lighting control bus (2) comprising a Digital Addressable Lighting Interface, DALI, bus.

8. A use of an emergency PSU (1) of any one of the claims 1 - 7 for continued power supply of a locally battery-buffered emergency lighting device (22) in presence of the emergency indication and after depletion of the local battery of said emergency device.

9. A use of an emergency PSU (1) of any one of the claims 1 - 7 for continued power supply of a sensor-based adaptive emergency lighting device (23) and continued communication with the same in presence of the emergency indication.

10. A use of an emergency PSU (1) of any one of the claims 1 - 7 for continued power supply of a lighting scene control device (25) for control of sensor-based adaptive emergency lighting devices (23) and continued communication with the same in presence of the emergency indication.

11. A kit (23, 24), comprising
an emergency lighting device (23) having a first interface (231); and
a sensor device (24) having a second interface (241);
the first and second interfaces (231, 241) being configured to
mate with one another for mechanical, electrical and communication connectivity between the emergency lighting device (32) and the sensor device (24).
